# EUROPÄISCHE PATENTSCHRIFT

(11) **EP 1 498 209 B1**
(45) Veröffentlichungstag und Bekanntmachung des Hinweises auf die Patenterteilung: **13.01.2016**
(21) Anmeldenummer: 04014916.3
(22) Anmeldetag: 25.06.2004
(51) Int. Cl.: B23K 9/08

(54) **Verfahren für die thermische Bearbeitung eines Werkstücks, thermische Bearbeitungsmaschine dafür**
Workpiece thermal machining method, thermal machining apparatus
Procédé d'usinage thermique d'une pièce, dispositif d'usinage thermique

(30) Priorität: 16.07.2003 DE 10332422
(43) Veröffentlichungstag der Anmeldung: 19.01.2005
(73) Patentinhaber: Messer Cutting Systems GmbH, 64823 Gross-Umstadt (DE)
(72) Erfinder: Faust, Josef, 64711 Erbach (DE); Albert, Hans-Joachim, 65719 Hofheim (DE); Fenner, Burkard, 64823 Gross-Umstadt (DE)
(74) Vertreter: Staudt, Armin Walter

(56) Entgegenhaltungen:
- US-A- 4 124 792
- US-A- 4 206 391
- US-A- 4 677 275

## Beschreibung

### Technischer Hintergrund

Die vorliegende Erfindung betrifft ein Verfahren für die thermische Bearbeitung eines Werkstücks aus einem ferromagnetischen Material mittels eines entlang der Werkstückoberfläche verfahrbaren thermischen Bearbeitungswerkzeuges, gemäß dem Oberbegriff des Anspruchs 1, bei der Werkstückoberfläche ein Wechselmagnetfeld erzeugt wird, das sowohl im Bereich der Werkstückoberfläche als auch in einem Sensorkörper mit ferromagnetischen Eigenschaften oberhalb der Werkstückoberfläche wirkt, wobei das Magnetfeld oder Änderungen desselben mittels einer Messeinrichtung erfasst, und die Messsignale der Messeinrichtung für die Regelung des Arbeitsabstands ausgewertet werden.

Weiterhin betrifft die Erfindung ein thermische Bearbeitungsmaschine für die Bearbeitung eines Werkstücks aus einem ferromagnetischen Material gemäß dem Oberbegriff des Anspruchs 5, mit einem entlang der Werkstückoberfläche verfahrbaren thermischen Bearbeitungswerkzeug, das einen Brennerkopf aufweist, an dem Schneid- oder Schweißwerkzeuge, welche sich zwischen dem Brennerkopf und der Werkstückoberfläche erstrecken, auswechselbar befestigt sind, und mit einer Abstandsregelung zur Einstellung eines vorgegebenen Arbeitsabstandes zwischen dem Bearbeitungswerkzeug und der Werkstückoberfläche, wobei die Abstandsregelung ein mit dem Bearbeitungswerkzeug bewegbares Erregerelement zum Erzeugen eines Magnetfeldes, das in einem Sensorkörper mit ferromagnetischen Eigenschaften oberhalb der Werkstückoberfläche und im Bereich der Werkstückoberfläche wirksam ist, eine Messeinrichtung zum Erfassen des Magnetfeldes oder von Änderungen desselben und eine Auswerteeinheit umfasst, mittels der Messsignale der Messeinrichtung für die Einstellung einer Stellgröße der Abstandsregelung ausgewertet werden.

Die thermische Bearbeitung von Werkstücken umfasst das Schweißen, Schneiden.

Im Hinblick auf eine hohe Qualität von Schweiß- oder Schneiden an Werkstücken gewinnt zunehmend die Online-Prozessüberwachung bei der thermischen Materialbearbeitung an Bedeutung. Für solche Automatisierungen müssen die Bearbeitungsvorgänge überwacht werden, um Prozessfehler zu vermeiden, die zu einem Ausfall bzw. und zu einer Unterbrechung des Verfahrensablaufs führen würden. Außerdem ist auf eine hohe und möglichst gleichbleibende Qualität eines Schnittes oder einer Schweißnaht zu achten. In diesem Zusammenhang spielt ein gleichbleibender Arbeitsabstand zwischen dem Bearbeitungswerkzeug und dem Werkstück eine wesentliche Rolle. Es sind verschiedene Abstands-Mess- und Regeleinrichtungen bekannt, die induktiv, kapazitiv oder manuell arbeiten.

### Stand der Technik

Ein Verfahren zur kapazitiven Abstandsmessung ist beispielsweise aus der DE 41 32 651 C bekannt. Die kapazitiven Sensoren werden konzentrisch oder versetzt zum Bearbeitungswerkzeug angeordnet; zum Beispiel in Form von Messelemente, die am Werkzeug befestigt und dem zu bearbeitenden Werkstück gegenüberliegend angeordnet sind. Der Abstand zwischen dem Messelement und dem Werkstück entspricht einer bestimmten Kapazität, die elektronisch gemessen und für eine Abstandsregelung verwendet wird.

Die kapazitive Messung des Abstandes zwischen Werkstück und Bearbeitungswerkzeug hat jedoch den Nachteil, dass der kapazitive Messwert durch parasitäre Kapazitäten, wie am Werkstück anhaftendem Rost, Oberflächenbeschichtungen, Wasser, Wasserdampf oder sich ändernde Umgebungsbedingungen beeinflusst wird. Auch die Störkontur des am Bearbeitungswerkzeug befestigten Sensorelements oder seines Halters wirken sich auf den Messwert aus. Die Störeffekte werden noch verstärkt, wenn das Bearbeitungswerkzeug und die um es herum angeordneten Komponenten bei der Materialbearbeitung durch Materialrückschlag verschmutzt werden.

Es werden auch Bearbeitungsmaschinen eingesetzt, bei denen der Bearbeitungsbereich von einem Wassermantel umgeben ist, um den Austritt umweltschädigender Substanzen zu vermindern. Die sich dabei bildende Pfütze aus leitfähigem Wasser führt ebenfalls zu einer Fehlmessung bei einer kapazitiven Abstandsmessung. Eine Unterwassererfassung von Daten mit kapazitiven Sensoren ist daher nicht möglich.

Weiterhin ist es bekannt, für die Abstandsmessung induktive Sensoren einzusetzen, wobei um den Brenner eine oder mehrere Inauktionsspulen angeordnet sind, von denen jede als frequenzbestimmendes Element in einem Schwingkreis geschaltet ist, welcher durch eine Induktivitätsänderung der Spule als Folge einer Abstandsänderung zum Werkzeug eine Frequenzänderung bewirkt. Die Auswertung derartiger Frequenzveränderungen erfolgt mittels bekannter Schaltungen oder Bandfiltern.

Bei den induktiven Sensoren ergeben sich hinsichtlich der Störgrößen die gleichen Probleme wie die oben für die kapazitiven Sensoren beschriebenen. Zudem haben induktive Sensoren den Nachteil, dass sie nur für eine Messung kurzer Arbeitsabstände geeignet sind, da sie hohen thermischen Belastungen nicht standhalten und somit nicht in unmittelbarer Nähe des Bearbeitungsprozesses angeordnet sein können.

Ein Verfahren und eine thermische Bearbeitungsmaschine sowie ein Bearbeitungswerkzeug gemäß der eingangs genannten Gattung sind aus der DE 37 23 844 A1 bekannt. Die Regelung des Arbeitsabstandes zwischen der Schneiddüse eines Schweißbrenners und dem zu bearbeitenden Werkstück erfolgt hierbei mittels eines Sensors in Form eines Magnetsystems. Der Sensor umfasst einen ringförmigen Körper aus einem Eisenwerkstoff, der den Brennerkopf umgibt, und der vier sich nach unten erstreckende Magnetjoche aufweist, welche konzentrisch und gleichmäßig um den Umfang der Schneiddüse verteilt sind. Die vier Joche tragen jeweils eine Spule, deren Spulenachse parallel zur Brenner-Längsachse verläuft. Zwei sich gegenüberliegende Spulen werden gleichsinnig in Serie geschaltet und als Erregerspulen eingesetzt, indem sie von einem hochfrequenten Wechselstrom durchflossen werden und dadurch in dem Sensorkörper ein Wechselmagnetfeld erzeugen. Bei dem zweiten Paar der sich gegenüberliegenden Spulen handelt es sich um Messspulen, in denen aufgrund des Wechselmagnetfeldes ein Wechselstrom induziert wird.

Unter der Voraussetzung, dass das zwischen dem Magnetjochen aufgebaute magnetische Wechselfeld durch das Werkstück bedämpft wird, werden die in den Messspulen induzierten Ströme von der Topografie und dem Abstand des unter dem Sensor liegenden Werkstücks beeinflusst. Diese Bedämpfung ist außer vom Abstand zwischen Schneiddüse und Werkstück auch von Werkstoffeigenschaften des Werkstückes abhängig, wie der magnetischen Permeabilität und seiner elektrischen Leitfähigkeit.

Der Abstand der Schneiddüse des Schweißbrenners von der Werkstückoberfläche ist daher eine Funktion der in den Messspulen induzierten Spannung, so dass diese in einer nachgeschalteten Elektronik mit Hilfe einer für den jeweiligen Prozess vorab erstellten Kennlinie in eine Spannung umgesetzt werden kann, die zum Abstand proportional ist und die als Stellgröße für die Abstandsregelung eingesetzt wird. In der Regeleinrichtung können für verschiedene Topographien und Werkstoffe die jeweiligen Kennlinien sowie die typischen Sollwerte für die Arbeitsabstände gespeichert werden.

Bei der bekannten Vorrichtung ist es erforderlich, dass das magnetische Joch und damit die Erreger- und Messspulen sich in der Nähe des zu bearbeitenden Werkstückes befinden. Dort sind sie einer hohen thermischen Belastung ausgesetzt. Die bestimmungsgemäße Funktion der Vorrichtung kann somit aufgrund der hohen Temperatur oder auch durch Materialrückschlag aus dem bearbeiteten Werkstück beeinträchtigt werden.

Das separate, den eigentlichen Schneidbrenner umgebende Magnetjoch bewirkt einen breiten Messfleck, der mit einer geringen Messgenauigkeit einhergeht. Es hat sich daher gezeigt, dass die Auswertung der Abstandsmessung bei dem bekannten Verfahren mit einem großen Messfehler behaftet ist.

Bei Änderungen der Prozessparameter, wie etwa dem zu bearbeitendem Werkstoff, seiner Topographie oder bei einem Wechsel des Bearbeitungswerkzeugs ist für die Regelung des Arbeitsabstands eine neue Kennlinie erforderlich, die aufwändig erzeugt werden muss.

Aus der US-A-4 677 275 die den Oberbegriff des Anspruchs 1, bzw. den Oberbegriff des Anspruchs 5 offenbart, ist eine Abstandsregelung bei einer mit Lichtbogen (Plasma) arbeitenden Bearbeitungsmaschine bekannt. Dabei wird der Lichtbogenström oder die Lichtbogenspannung zur Abstandsregelung eingesetzt. Das entsprechende Signal wird in das vorhandene Sensorsystem für die Erstwertfindung des Abstandes eingespeist. Das Sensorsystem für die Erstwertfindung ist eine kapazitive Messeinrichtung oder eine induktive Messeinrichtung. In keinem Fall beinhaltet die Messeinrichtung einen Sensor zur Auswertung eines magnetischen Feldes und es gibt es auch keinen zur Abstandsmessung auswertbaren magnetisch geschlossenen Kreis zwischen Brenner und Werkstück.

### Technische Aufgabenstellung

Der Erfindung liegt daher die Aufgabe zugrunde, ein Verfahren für die thermische Bearbeitung eines Werkstückes anzugeben, bei dem der Arbeitsabstand zwischen dem Bearbeitungswerkzeug und dem Werkstück auf einfache Art und Weise und gleichzeitig mit hoher Genauigkeit eingestellt und geregelt werden kann, und das gegen äußere Störeinflüsse weitgehend unempfindlich ist.

Weiterhin liegt der Erfindung die Aufgabe zugrunde, eine geeignete Bearbeitungsmaschine bereitzustellen, welche eine punktuelle Messung des Arbeitsabstandes ermöglicht und die auch für die Messung großer Abstände geeignet ist.

### Zusammenfassung der Erfindung

Hinsichtlich des Verfahrens wird diese Aufgabe ausgehend von dem eingangs genannten Verfahren erfindungsgemäß dadurch gelöst, dass als Sensorkörper der Brennerkopf und mindestens eines der Schneid- oder Schweißwerkzeuge eingesetzt werden.

Beim erfindungsgemäßen Verfahren wird zur Einstellung des Arbeitsabstandes zwischen der Werkstückoberfläche und dem thermischen Bearbeitungswerkzeug ein magnetisches System eingesetzt, bei dem der Sensorkörper durch den Brennerkopf und mindestens eines der am Brennerkopf fixierten Schneid- oder Schweißwerkzeuge gebildet wird.

Der Brennerkopf und das betreffende mindestens eine Schneid- oder Schweißwerkzeug weisen deshalb ferromagnetische Eigenschaften auf. Diese Teile sind vollständig oder teilweise aus einem ferromagnetischen Material gefertigt. Eine Beschichtung der Teile, beispielsweise zum Schutz vor Oxidation, beeinträchtigt das erfindungsgemäße Verfahren nicht.

Bei den insgesamt mit dem Brennerkopf verbundenen Schneid- oder Schweiß-werkzeugen handelt es sich in der Regel um eine Schneiddüse, die häufig von einer Heizdüse umgeben ist, oder um eine Elektrode (bei einem Plasmabrenner). Schneid- und Heizdüse werden häufig mittels eines Halteringes, der die Düsen kappenförmig umgreift, an dem Brennerkopf fixiert. Eines dieser Teile zwischen Brennerkopf und Werkstückoberfläche (wie: Düse Elektrode, Heizdüse, Haltekappe), mehrere oder alle diese Teile weisen ferromagnetische Eigenschaften auf und werden im Folgenden auch als "Sensorspitze" bezeichnet.

Der Verlust an magnetischer Feldstärke ist umso geringer, je größer der Querschnitt an ferromagnetischem Material von der Erregerstelle bis zur Werkstückoberfläche ist. Das Material mit ferromagnetischen Eigenschaften ist in der Regel Eisen oder eine eisenhaltige Legierung. Der Brennerkopf und die Sensorspitze bestehen aus dem gleichen Material oder aus unterschiedlichen Materialien. Wesentlich ist, dass das Material des Sensorkörpers insgesamt in einem elektrischen Wechselfeld magnetisch polarisierbar ist und dass die magnetische Feldstärke im Bereich der Werkstückoberfläche messbar ist und durch das Werkstück bedämpft wird.

Mittels des Sensorkörpers wird die magnetische Polarisation von der Stelle ihrer Erregung in Richtung auf die Werkstückoberfläche übertragen, was schematisch durch magnetische Feldlinien dargestellt werden kann, welche in einer geschlossenen Bahn von der Erregungsstelle ausgehend über den Brennerkopf und die Sensorspitze verlaufen und bei ihrem Rückweg mit dem Werkstück so in Wechselwirkung treten, dass das magnetische Feld bedämpft wird. Eine Änderung des Abstandes zwischen Sensorspitze und Werkstückoberfläche macht sich daher in einer Änderung der Eigenschaften des magnetischen Feldes bemerkbar. Diese Änderung der Eigenschaften des magnetischen Feldes wird für eine Abstandsregelung herangezogen, wie dies weiter unten noch näher erläutert wird.

Der Sensorkörper wird durch den Brennerkopf und die Sensorspitze gebildet und mittels diesem das erzeugte magnetische Feld bis an die Werkstückoberfläche herangeführt und so auf den Bereich des Schneidprozesses fokussiert. Dadurch wird eine punktgenaue Abstandsregelung erleichtert. Ein separater, außerhalb des Brennerkopfes anzuordnender Sensorkörper - wie im Stand der Technik vorgeschlagen ― ist nicht erforderlich.

Die Erregung des magnetischen Feldes erfolgt in einer Entfernung von der Werkstückoberfläche, die einerseits eine geringe Beeinträchtigung des Erregungsmittels durch die Prozesstemperatur und andererseits eine für die Auswertung genügend große magnetische Feldstärke im Bereich der Werkstückoberfläche gewährleistet. Die Stelle der Magnetfelderregung befindet sich im Bereich des Brennerkopfes oder außerhalb davon. Im Hinblick auf die Messgenauigkeit ist es günstig, dass der Brennerkopf bei den üblichen Bearbeitungswerkzeugen eine vergleichsweise große Masse aufweist, und daher über den Brennerkopf ein großer Querschnitt mit ferromagnetischem Material zur Verfügung gestellt werden kann, so dass die Verluste im elektrischen Wechselfeld gering sind.

Eine Verbesserung des erfindungsgemäßen Verfahrens wird dadurch erreicht, dass das Magnetfeld mittels einer Erregerspule erzeugt wird, durch welche sich der Sensorkörper so erstreckt, dass er oberhalb und unterhalb einer Querschnittsebene, durch welche eine mittlere Spulenebene der Erregerspule verläuft, von magnetischen Feldlinien durchflossen wird, wobei die magnetischen Feldlinien oberhalb der Spulenebene mittels eines oberen Messelements erfasst werden und dabei ein erstes Messsignal erzeugt wird, das eine erste Amplitude und eine erste Phase aufweist, und wobei die magnetischen Feldlinien unterhalb der Spulenebene mittels eines unteren Messelements erfasst werden und dabei ein zweites Messsignal erzeugt wird, das eine zweite Amplitude und eine zweite Phase aufweist, wobei die relative Lage zwischen erster Phase und zweiter Phase ermittelt und als Phasenverschiebung für die Regelung des Arbeitsabstands verwendet wird.

Hierbei wird zur Erzeugung des Magnetfeldes eine Erregerspule eingesetzt, die den Sensorkörper umgibt, so dass in diesem ein rotationssymmetrisches, zu einer Sensorkörper-Längsachse koaxiales Magnetfeld erzeugt werden kann. Durch die Rotationssymmetrie des Magnetfeldes werden Vorzugsrichtungen oder Abschattungen vermeiden, so dass sich die Abstandsmessung in allen lateralen Richtungen gleich verhält, was zu einer höheren Messgenauigkeit führt.

Die Erregerspule ist in Bezug auf den Sensorkörper so angeordnet, dass sich dieser oberhalb und unterhalb der Erregerspule erstreckt, insbesondere erstreckt er sich oberhalb und unterhalb einer Querschnittsebene, durch welche die mittlere Spulenebene der Erregerspule verläuft. Die mittlere Spulenebene befindet sich in der Hälfte der Höhe der Erregerspule. Das so erzeugte magnetische Feld hat einen Anteil oberhalb der mittleren Spulenebene und einen Anteil unterhalb davon. Diese Anteile des magnetischen Feldes werden separat mittels eines oberen Messelements bzw. mittels eines unteren Messeelementes erfasst.

Es sind demnach mindestens zwei Messelemente vorgesehen, welche jeweils ein Messsignal in Form eines elektrischen Wechselfeldes erzeugen, das eine Amplitude aufweist, die von der magnetischen Feldstärke in dem betreffenden Bereich abhängt, und das jeweils eine bestimmte Phasenlage für den Nulldurchgang aufweist.

Erfindungsgemäß wird nicht die Amplitude für die Regelung des Arbeitsabstandes ausgewertet, sondern die relative Lage zwischen den Phasen des ersten und des zweiten Messsignals. Denn es wurde gefunden, dass sich einer Änderung des Arbeitsabstandes nicht nur auf die Amplitude, sondern auch auf die Phasenlage der Messsignale auswirkt. Eine Änderung des Arbeitsabstandes bewirkt eine relative Verschiebung der Phasenlage von erstem und zweitem Messsignal. Diese Phasenverschiebung wird erfindungsgemäß für die Regelung des Arbeitsabstandes verwendet, denn es hat sich weiterhin gezeigt, dass die Phasenverschiebung unempfindlicher auf Störgrößen im Bereich des magnetischen Feldes reagiert als die Amplitude des Messsignals, so dass die Auswertung der Phasenverschiebung eine größere Messgenauigkeit ergibt.

Darüber hinaus entfällt bei der erfindungsgemäßen Verfahrensweise die Notwendigkeit, für die Auswertung der Messsignale in Bezug auf den Arbeitsabstand eine Kennlinie erstellen zu müssen. Für die Abstandsregelung genügt es, den Ausgangswert der Phasenverschiebung beim Sollwert des Arbeitsabstandes festzustellen und bei Abweichungen hiervon, den Abstand nachzuregeln.

Vorzugsweise sind das obere Messelement als obere Messspule, und das untere Messelement als untere Messspule ausgebildet, wobei die obere Messspule und die untere Messspule so miteinander verbunden sind, dass sich die erste und die zweite Amplitude mindestens teilweise gegenseitig kompensieren.

Die Ausbildung der Messelemente in Form von Messspulen ergibt ein im Wesentlichen temperaturunabhängiges Messsignal. Die Messspulen sind dabei so verschaltet, dass sich die Amplituden der beiden Messsignale gegenseitig zumindest teilweise kompensieren. Dadurch wird die Auswertung der Phasenverschiebung erleichtert. Zur Erzeugung eines elektrischen Signals ist eine Bewegung von elektrisch leitenden Teilen innerhalb der Messspulen nicht erforderlich.

Ein besonders günstiges Ergebnis ergibt sich dann, wenn eine koaxial um eine Mittelachse des Sensorkörpers verlaufende Erregerspule eingesetzt wird.

Durch Einsatz einer koaxial um die Mittelachse des Sensorkörpers verlaufenden Erregerspule wird ein rotationssymmetrisches Magnetfeld erzeugt, das auf den Punkt des Schneidprozesses fokussiert ist und das daher keine Vorzugsrichtung aufweist. In Verbindung mit einer ebenso rotationssymmetrischen Erfassung des Magnetfeldes durch Messspulen, welche koaxial um die Mittelachse des Sensorkörpers verlaufen, ergibt sich eine hohe Messgenauigkeit.

Hinsichtlich des thermischen Bearbeitungswerkzeugs wird die obengenannte Aufgabe ausgehend von dem gattungsgemäßen Bearbeitungswerkzeug erfindungsgemäß dadurch gelöst, dass der Brennerkopf und mindestens eines der Schneidoder Schweißwerkzeuge ferromagnetisches Material enthalten und mindestens einen Teil des Sensorkörpers bilden.

Für die Einstellung des Arbeitsabstandes zwischen der Werkstückoberfläche und dem thermischen Bearbeitungswerkzeug wird erfindungsgemäß ein magnetisches System eingesetzt, bei dem der Sensorkörper durch den Brennerkopf und mindestens eines der am Brennerkopf fixierten Schneid- oder Schweißwerkzeuge gebildet wird.

Der Brennerkopf und das betreffende mindestens eine Schneid- oder Schweißwerkzeug weisen deshalb ferromagnetische Eigenschaften auf. Diese Teile sind vollständig oder teilweise aus einem ferromagnetischen Material gefertigt. Eine Beschichtung der Teile, beispielsweise zum Schutz vor Oxidation, beeinträchtigt das Ergebnis nicht wesentlich.

Bei den insgesamt mit dem Brennerkopf verbundenen Schneid- oder Schweißwerkzeugen handelt es sich in der Regel um eine Schneiddüse, die von einer Heizdüse umgeben ist. Schneid- und Heizdüse werden häufig mittels eines Halteringes, der die Düsen kappenförmig umgreift, an dem Brennerkopf fixiert. Bei einem Plasmabrenner bildet die Elektrode ein wesentliches Schneid- oder Schweißwerkzeug im Sinne der Erfindung. Eines der Teile zwischen Brennerkopf und Werkstückoberfläche, mehrere oder alle diese Teile weisen ferromagnetische Eigenschaften auf und werden im Folgenden auch als "Sensorspitze" bezeichnet.

Der Verlust an magnetischer Feldstärke ist umso geringer, je größer der Querschnitt an ferromagnetischem Material von der Erregerstelle bis zur Werkstückoberfläche ist. Das Material mit ferromagnetischen Eigenschaften ist in der Regel Eisen oder eine eisenhaltige Legierung. Der Brennerkopf und die Sensorspitze bestehen aus dem gleichen Material oder aus unterschiedlichen Materialien. Wesentlich ist, dass das Material des Sensorkörpers insgesamt in einem elektrischen Wechselfeld magnetisch polarisierbar ist und dass die magnetische Feldstärke im Bereich der Werkstückoberfläche messbar ist und durch das Werkstück bedämpft wird.

Mittels des Sensorkörpers wird die magnetische Polarisation von der Stelle ihrer Erregung in Richtung auf die Werkstückoberfläche übertragen, was schematisch durch magnetische Feldlinien dargestellt werden kann, welche in einer geschlossenen Bahn von der Erregungsstelle ausgehend über den Brennerkopf und die Sensorspitze verlaufen und bei ihrem Rückweg mit dem Werkstück so in Wechselwirkung treten, dass das magnetische Feld bedämpft wird. Eine Änderung des Abstandes zwischen Sensorspitze und Werkstückoberfläche macht sich daher in einer Änderung der Eigenschaften des magnetischen Feldes bemerkbar. Diese Änderung der Eigenschaften des magnetischen Feldes wird für eine Abstandsregelung herangezogen, wie dies oben anhand des erfindungsgemäßen Verfahrens erläutert ist.

Der Sensorkörper wird durch den Brennerkopf und die Sensorspitze gebildet und mittels diesem das erzeugte magnetische Feld bis an die Werkstückoberfläche herangeführt und so auf den Bereich des Schneidprozesses fokussiert. Dadurch wird eine punktgenaue Abstandsregelung erleichtert. Ein separater, außerhalb des Brennerkopfes anzuordnender Sensorkörper - wie im Stand der Technik vorgeschlagen ― ist nicht erforderlich.

Die Erregung des magnetischen Feldes erfolgt in einer Entfernung von der Werkstückoberfläche, die einerseits eine geringe Beeinträchtigung des Erregungsmittels durch die Prozesstemperatur und andererseits eine für die Auswertung genügend größe magnetische Feldstärke im Bereich der Werkstückoberfläche gewährleistet. Die Stelle der Magnetfelderregung befindet sich im Bereich des Brennerkopfes oder außerhalb davon. Im Hinblick auf die Messgenauigkeit ist es günstig, dass der Brennerkopf bei den üblichen Bearbeitungswerkzeugen eine vergleichsweise große Masse aufweist, und daher über den Brennerkopf ein großer Querschnitt mit ferromagnetischem Material zur Verfügung gestellt werden kann, so dass die Verluste im elektrischen Wechselfeld gering sind.

Es hat sich als vorteilhaft erwiesen, wenn das Erregerelement als Erregerspule ausgebildet ist, durch welche sich der Sensorkörper so erstreckt, dass in ihm magnetische Feldlinien oberhalb und unterhalb einer Querschnittsfläche verlaufen, welche die mittlere Spulenebene der Erregerspule umfasst, wobei ein oberes Messelement und ein unteres Messelement vorgesehen sind, und wobei sich das obere Messelement im Bereich oberhalb der mittleren Spulenebene, und das untere Messelement im Bereich unterhalb der mittleren Spulenebene erstrecken.

Das Erregerelement ist erfindungsgemäß als Erregerspule ausgebildet, welche den Sensorkörper umgibt. Dabei ist der Sensorkörper innerhalb der Erregerspule so angeordnet, dass in ihm eine magnetische Polarisation erzeugt wird, mit Feldlinien oberhalb und unterhalb einer Querschnittsfläche, in welcher die mittlere Spulenebene der Erregerspule liegt. Oberhalb und unterhalb dieser Spulenebene sind ein oberes Messelement und ein unteres Messelement vorgesehen, die Teil der Messeinrichtung sind. Das obere Messelement erstreckt sich mindestens teilweise entlang des Sensorkörpers im Bereich oberhalb der mittleren Spulenebene, und das untere Messelement erstreckt sich mindestens teilweise entlang des Bereichs unterhalb der mittleren Spulenebene. Im einfachsten Fall ist das obere Messelement oberhalb der Erregerspule und das untere Messelement unterhalb derselben angeordnet. Bei einer Übereinander-Anordnung von Erregerspulen und Messelementen ergibt sich ein geringer seitlicher Aufbau, so dass ein besonders schmales Bearbeitungswerkzeugs ermöglicht wird. Alternativ dazu sind die beiden Messelemente beispielsweise unmittelbar übereinander vor oder hinter der Erregerspule angeordnet.

Die Messeinrichtung erlaubt eine Auswertung von Messsignalen unter Verwendung der Phasenverschiebung des Messsignals, wie es oben an Hand des erfindungsgemäßen Verfahrens näher beschrieben ist.

Die Messelemente sind beispielsweise seitlich zum Sensorkörper angeordnet. In einer besonders bevorzugten Ausführungsform des erfindungsgemäßen Bearbeitungswerkzeuges sind die Messelemente jedoch in Form einer oberen Messspule und einer unteren Messspule ausgebildet, wobei die obere Messspule, die untere Messspule und die Erregerspule eine gemeinsame Mittelachse aufweisen, in welcher sich der Sensorkörper erstreckt.

Die Ausbildung der Messeinrichtungen in Form von Messspulen anstelle anderer Magnetfeld-Messeinrichtungen, wie Hall-Sensoren oder Magnetfeldsensoren hat den Vorteil, dass das erhaltene Messsignal im wesentlichen temperaturunabhängig ist.

Die koaxiale Anordnung der Erregerspule und der Messspulen um eine gemeinsame Mittelachse, in welcher der Sensorkörpers verläuft, ermöglicht die Erzeugung und Auswertung eines rotationssymmetrischen Magnetfelds, das auf den Punkt des Schneidprozesses fokussiert ist, sowie eine dazu symmetrische Erfassung des Magnetfelds mittels der Messspulen.

Es hat sich besonders bewährt, wenn die obere Messspule und die untere Messspule so ausgelegt sind, dass sich die in den Messspulen erzeugten Spannungen in der Arbeitsposition des Bearbeitungswerkzeugs kompensieren.

Die Spulen sind hinsichtlich ihrer Windungszahl und Größe so ausgelegt, dass in der Arbeitsposition die Amplituden der in den Messspulen erzeugten Spannungen sich etwa zu Null addieren. Dadurch wird gewährleistet, dass sich bei Änderungen des Arbeitsabstandes die Messsignale der beiden Messspulen in etwa proportional verändern, damit wird eine Auswertung der Phasenverschiebung wie oben an Hand des erfindungsgemäßen Verfahrens beschrieben, erleichtert.

Vorteilhafterweise bestehen der Brennerkopf und das mindestens eine Schneid- oder Schweißwerkzeug vollständig aus ferromagnetischem Material.

Im Hinblick auf die Messgenauigkeit ist es günstig, wenn mittels des Brennerkopfes ein großer Querschnitt an ferromagnetischem Material zu Verfügung gestellt wird, so dass Verluste der magnetischen Feldstärke gering gehalten werden können. Ein aus ferromagnetischem Material bestehender Brennerkopf kann, beispielsweise zum Schutz des eisenhaltigen Materials vor Oxidation, mit einer Beschichtung versehen sein. Dies gilt gleichermaßen für das mindestens eine der Schneid- oder Schweißwerkzeuge.

### Ausführungsbeispiel

Nachfolgend wird die Erfindung anhand von Ausführungsbeispielen und einer Zeichnung näher beschrieben, in der Zeichnung zeigt im Einzelnen in schematischer Darstellung:
- **Figur 1**: eine Ausführungsform des erfindungsgemäßen Bearbeitungswerkzeugs in Form eines Autogenschneidbrenners,
- **Figur 2**: eine schematische Darstellung des Verlaufs der magnetischen Feldlinien innerhalb und außerhalb des Schneidbrenners, und
- **Figur 3**: die Ausführungsform des erfindungsgemäßen Bearbeitungswerkzeugs gemäß Figur 1, ergänzt um ein Schaltbild zur Auswertung der Messsignale.

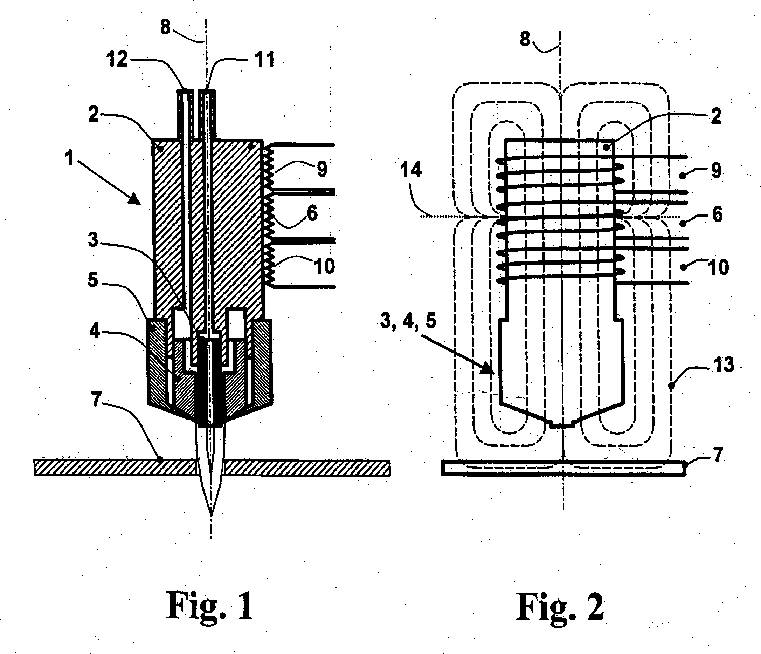

**Figur 1** zeigt einen Autogenschneidbrenner, dem insgesamt die Bezugsziffer 1 zugeordnet ist. Der Autogenschneidbrenner 1 umfasst einen Brennerkopf 2, an dem eine Schneiddüse 3 und eine die Schneiddüse 3 umgebende Heizdüse 4 mittels einer Haltekappe 5 auswechselbar gehalten werden. Wesentlich für die vorliegende Erfindung ist, dass der Brennerkopf 2 und mindestens eines der Schneid- oder Schweißwerkzeuge (3, 4, 5) ferromagnetische Eigenschaften aufweisen. Im Ausführungsbeispiel sind sowohl der Brennerkopf 2 als auch die Schneiddüse 3, die Heizdüse 4 und die Haltekappe 5 aus einer ferromagnetischen Eisen-Siliziumlegierung mit 3 bis 4 Gew.-% Silicium gefertigt. Zum Schutz vor Oxidation sind alle diese Teile (2, 3, 4, und 5) mit einer Beschichtung aus einem dichten, korrosionsfesten Material, wie zum Beispiel Chrom, Titan, Chromnitrid (oder einem ähnlichen wirkenden Werkstoff) versehen.

Der Brennerkopf 2 weist eine Mittelachse 8 auf, entlang der eine Leitung 11 für die Zufuhr von Schneidsauerstoff zur Schneiddüse 3 verläuft. Weiterhin ist eine Leitung 12 für die Zufuhr von Brenngas vorgesehen.

Brennerkopf 2, Schneiddüse 3, Heizdüse 4 und Haltekappe 5 sind mechanisch miteinander in Kontakt und werden mittels einer Erregerspule 6, die mit einem Wechselspannungsgenerator 20 verbunden ist, mit wechselnder Polarität magnetisch polarisiert. Der Wechselspannungsgenerator 20 kann als separates Bauteil ausgebildet sein, oder die Netzfrequenz nutzen. Durch die Magnetisierung bilden sich die in Figur 2 schematisch dargestellten magnetischen Feldlinien 13 aus, welche die aus ferromagnetischem Werkstoff bestehenden Teile (2, 3, 4, 5) sowie das Werkstück 7, das ebenfalls aus einem ferromagnetischen Material besteht, durchfließen.

Eine weitere Besonderheit des erfindungsgemäßen thermischen Bearbeitungswerkzeuges besteht darin, dass die Erregerspule 6 den Brennerkopf 2 koaxial zu dessen Mittelachse 8 umgibt, wodurch ein rotationssymmetrisches magnetisches Feld entsteht, wie dies in der schematischen Darstellung von Figur 2 erkennbar ist.

Oberhalb der Erregerspule 6 ist eine obere Messspule 9 und unterhalb davon eine untere Messspule 10 vorgesehen. Sie umgeben den Brennerkopf 2 ebenfalls koaxial zu dessen Mittelachse 8, so dass eine rotationssymmetrische Erfassung der magnetischen Feldlinien 13 ermöglicht wird, wie dies aus Figur 2 zu entnehmen ist. Infolge der in Bezug auf die Höhe des Sensorkörpers (Teile 2, 3, 4, 5) asymmetrischen Anordnung der Erregerspule 6, ergibt sich auch eine entsprechende anfängliche Asymmetrie der Feldlinienverteilung. Die beiden Messspulen 9; 10 sind so ausgelegt und elektrisch so miteinander verbunden, dass sich trotz dieser Asymmetrie die Amplituden ihrer Ausgangssignale beim vorgegebenen Arbeitsabstand "A" gegenseitig in etwa kompensieren. Die Erregerspule 6 weist eine mittlere Spulenebene 14 auf, oberhalb der ein Teil der Feldlinien 13 verlaufen, deren Feldstärke von der oberen Messspule 9 erfasst werden, und unterhalb der ein Teil der Feldlinien 13 verlaufen, deren Feldstärke von der unteren Messspule 10 erfasst werden.

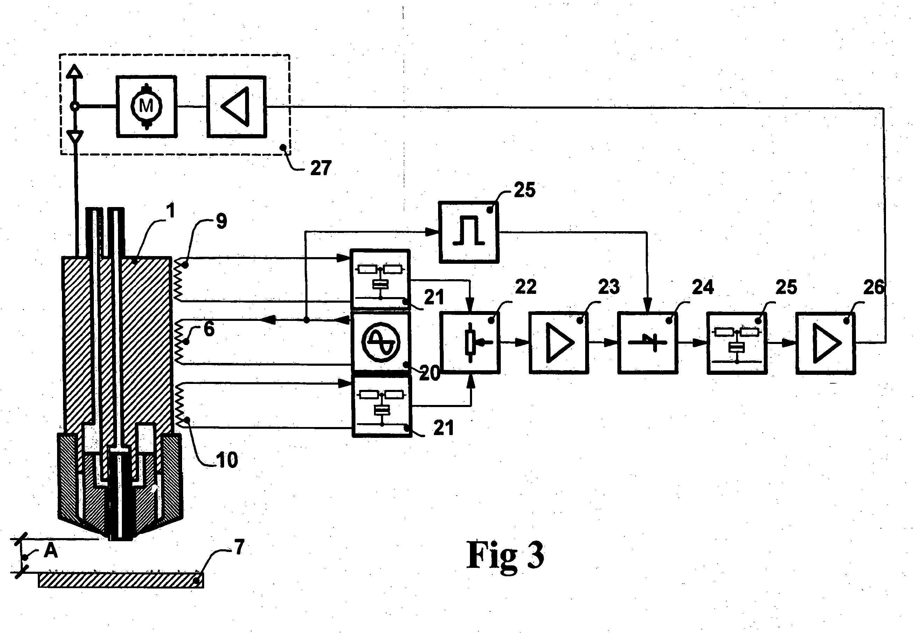

Das erfindungsgemäße Verfahren zur Bearbeitung eines Werkstücks wird nachfolgend anhand von **Figur 3** beispielhaft beschrieben.

In Figur 3 sind zur Kennzeichnung der Bestandteile des erfindungsgemäßen Autogenbrenners 1 die gleichen Bezugsziffern verwendet, wie in Figur 1. Mittels des Wechselstromgenerators 20 wird im Bereich der Erregerspule 6 ein niederfrequentes elektrisches Wechselfeld erzeugt, die wiederum in dem ferromagnetischen Material des Brennerkopfes 2 eine magnetische Polarisierung bewirkt bei der Nordpol und Südpol mit gleicher Frequenz wechseln. Die durch die Wechsel-Magnetisierung erzeugten magnetischen Feldlinien 13 durchfließen den Autogenbrenner sowie das Werkstück 7. Dadurch wird in den beiden Messspulen 9, 10 ein elektrisches Signal mit einer gegenläufigen Amplitude und einer bestimmten Phasenlage des Nulldurchgangs erzeugt.

Bei Abstandsänderungen des Autogenbrenners 1 zum Werkstück 7 verlängern oder verkürzen sich die Feldlinien 13. Dadurch ergibt sich für beide Messspulen 9, 10 nicht nur eine Änderung der Amplitude des jeweiligen Signals, sondern auch eine Verschiebung der Phasenlage. Für die Regelung des Arbeitsabstandes wird nicht die Amplitude des Signals der Messspulen 9, 10 ausgewertet, sondern ausschließlich die Phasenverschiebungen der in den Messspulen 9, 10 erzeugten Spannungen.

Figur 3 zeigt eine Ausführungsform für eine derartige Auswertung der Phasenlage der mittels der erfindungsgemäßen Vorrichtung erhaltenen Messsignale für den Zweck einer Regelung des Arbeitsabstandes zwischen Werkstückoberfläche und Autogenbrenner 1.

Hierzu werden die von der oberen Messspule 9 und der unteren Messspule 10 erfassten Signale jeweils einem frequenzselektiven Filter 21 eingespeist, wodurch das Signalrauschen unterdrückt wird. Die selektierten Signale werden einem Potentiometer 22 zugeführt. Die Ausgangsspannung am Potentiometer 22 wird im Ausführungsbeispiel rechnergestützt auf Null eingestellt. Durch den Nullabgleich wird die oben erwähnte anfängliche Asymmetrie der Feldünienverteilung unter Berücksichtigung des vorgegebenen Soll-Arbeitsabstandes ausgeglichen, soweit dies nicht bereits durch Auslegung der Messspulen 9; 10 erfolgt ist. Auf diese Weise werden somit die Amplituden der Spannungssignale aus den Messspulen 9 und 10 unter Berücksichtigung des Soll-Arbeitsabstand gegenseitig kompensiert und das Restsignal auf den Wert Null eingestellt. Diese Maßnahme erleichtert die Auswertung der Phasenverschiebung bei einer Änderung des Arbeitsabstandes "A" zwischen dem Autogenschneidbrenner 1 und der Oberfläche des Werkstücks 7.

Über einen Verstärker 23 gelangt das Potentiometersignal in einen Phasendiskriminator 24, wo es mit einem synchronen Referenzsignal, das von dem Wechselspannungsgenerator 20 abgegriffen wird (symbolisiert durch einen Komparator 25), verglichen wird. Änderungen des Ausgangssignals des Wechselspannungsgenerators 20 im Verlaufe eines Bearbeitungsprozesses, beispielsweise infolge einer Temperaturdrift, wirken sich auf das Referenzsignal und auf die Ausgangssignale der Messspulen 9, 10 gleichermaßen aus.

Bei dem Phasendiskriminator 24 handelt es sich um einen phasenabhängigen Gleichrichter, anhand dessen festgestellt werden kann, ob eine aktuelle Phasenverschiebung über dem voreingestellten "Null" liegt, oder darunter. Die Ausgangssignale des Phasendiskriminators 24 werten vorzeichenrichtig in dem Filter 25 aufintegriert und anschließend über einen weiteren Verstärker 26 als Stellgröße für die Abstandsregelung einer Motorsteuerung 27 für den Hub des Autogenbrenners 1 zugeführt.

## Patentansprüche

1. Verfahren für die thermische Bearbeitung eines Werkstücks aus einem ferromagnetischen Material mittels eines entlang der Werkstückoberfläche (7) verfahrbaren thermischen Bearbeitungswerkzeuges (1), **dadurch gekennzeichnet, dass** bei dem zur Regelung des Arbeitsabstands (A) zwischen dem Bearbeitungswerkzeug (1) und der Werkstückoberfläche (7) ein Wechselmagnetfeld erzeugt wird, das sowohl im Bereich der Werkstückoberfläche (7) als auch in einem Sensorkörper mit ferromagnetischen Eigenschaften oberhalb der Werkstückoberfläche (7) wirkt, wobei das Wechselmagnetfeld oder Änderungen desselben mittels einer Messeinrichtung (9; 10) erfasst, und die Messsignale der Messeinrichtung (9; 10) für die Regelung des Arbeitsabstands (A) ausgewertet werden, wobei als Sensorkörper (2; 3; 4; 5) der Brennerkopf (2) und mindestens eines der Schneid- oder Schweißwerkzeuge (3; 4; 5) eingesetzt werden.

2. Verfahren nach Anspruch 1, **dadurch gekennzeichnet, dass** das Magnetfeld mittels einer Erregerspule (6) erzeugt wird, durch welche sich der Sensorkörper (2; 3; 4; 5) so erstreckt, dass er oberhalb und unterhalb einer Querschnittsebene, durch welche eine mittlere Spulenebene (14) der Erregerspule (6) verläuft, von magnetischen Feldlinien (13) durchflossen wird, und dass die magnetischen Feldlinien (13) oberhalb der Spulenebene (14) mittels eines oberen Messelements (9) erfasst werden, wobei ein erstes Messsignal erzeugt wird, das eine erste Amplitude und eine erste Phase aufweist, und dass die magnetischen Feldlinien (13) unterhalb der Spulenebene (14) mittels eines unteren Messelements (10) erfasst werden, wobei ein zweites Messsignal erzeugt wird, das eine zweite Amplitude und eine zweite Phase aufweist, wobei die relative Lage zwischen erster Phase und zweiter Phase ermittelt und eine Phasenverschiebung für die Regelung des Arbeitsabstands (A) verwendet wird.

3. Verfahren nach Anspruch 2, **dadurch gekennzeichnet, dass** das obere Messelement als obere Messspule (9), und das untere Messelement als untere Messspule (10) ausgebildet sind, und dass die obere Messspule (9) und die untere Messspule (10) so miteinander verbunden sind, dass sich die erste und die zweite Amplitude mindestens teilweise gegenseitig kompensieren.

4. Verfahren nach Anspruch 3, **dadurch gekennzeichnet, dass** eine koaxial um eine Mittelachse (8) des Sensorkörpers (2; 3; 4; 5) verlaufende Erregerspule (6) eingesetzt wird.

5. Thermische Bearbeitungsmaschine für die Bearbeitung eines Werkstücks aus einem ferromagnetischen Material, mit einem entlang der Werkstückoberfläche (7) verfahrbaren thermischen Bearbeitungswerkzeug (1), das einen Brennerkopf (2) aufweist, an dem Schneid- oder Schweißwerkzeuge (3; 4; 5), welche sich zwischen dem Brennerkopf (1) und der Werkstückoberfläche (7) erstrecken, auswechselbar befestigt sind, und mit einer Abstandsregelung zur Einstellung eines vorgegebenen Arbeitsabstandes (A) zwischen dem Bearbeitungswerkzeug (1) und der Werkstückoberfläche (7), **dadurch gekennzeichnet, dass** die Abstandsregelung ein mit dem Bearbeitungswerkzeug (1) be-wegbares Erregerelement (6) zum Erzeugen eines Magnetfeldes, das in einem Sensorkörper mit ferromagnetischen Eigenschaften oberhalb der Werkstückoberfläche (7) und im Bereich der Werkstückoberfläche (7) wirksam ist, eine Messeinrichtung (9; 10) zum Erfassen des Magnetfeldes oder von Änderungen desselben und eine Auswerteeinheit (21 - 27) umfasst, mittels der Messsignale der Messeinrichtung für die Einstellung einer Stellgröße der Abstandsregelung ausgewertet werden, wobei der Brennerkopf (2) und mindestens eines der Schneid- oder Schweißwerkzeuge (3; 4; 5) ferromagnetisches Material enthalten und mindestens einen Teil des Sensorkörpers (2; 3; 4; 5) bilden.

6. Bearbeitungsmaschine nach Anspruch 5, **dadurch gekennzeichnet, dass** das Erregerelement als Erregerspule (6) ausgebildet ist, durch welche sich der Sensorkörper (2; 3; 4; 5) so erstreckt, dass in ihm magnetische Feldlinien (13) oberhalb und unterhalb einer Querschnittsfläche verlaufen, welche die mittlere Spulenebene (14) der Erregerspule (6) umfasst, wobei ein oberes Messelement (9) und ein unteres Messelement (10) vorgesehen sind, und wobei sich das obere Messelement (9) im Bereich oberhalb der mittleren Spulenebene (14), und das untere Messelement (10) im Bereich unterhalb der mittleren Spulenebene (14) erstrecken.

7. Bearbeitungsmaschine nach Anspruch 6, **dadurch gekennzeichnet, dass** die Messelemente in Form einer oberen Messspule (9) und einer unteren Messspule (10) ausgebildet sind, wobei die obere Messspule (9), die untere Messspule (10) und die Erregerspule (6) eine gemeinsame Mittelachse (8) aufweisen, in welcher sich der Sensorkörper (2; 3; 4; 5) erstreckt.

8. Bearbeitungsmaschine nach Anspruch 7, **dadurch gekennzeichnet, dass** die obere Messspule (9) und die untere Messspule (10) so ausgelegt sind, dass sich die in den Messspulen (9; 10) erzeugten Spannungen in der Arbeitsposition des Bearbeitungswerkzeugs (1) kompensieren.

9. Bearbeitungsmaschine nach einem der vorhergehenden Ansprüche 5 bis 8, **dadurch gekennzeichnet, dass** der Brennerkopf (2) und das mindestens eine der Schneid- oder Schweißwerkzeuge (3; 4; 5) aus ferromagnetischem Material bestehen.

## Claims

1. A method for thermally working a workpiece consisting of a ferromagnetic material by means of a thermal working tool (1), which is moveable along a workpiece surface (7), **characterized in that** an alternating magnetic field is produced for controlling a working distance (A) between said working tool (1) and said workpiece surface (7), said alternating magnetic field acting both in the area of said workpiece surface (7) and in a sensor body with ferromagnetic properties above said workpiece surface (7), said magnetic field or changes thereof being sensed by means of a measuring device (9; 10), and measurement signals of said measuring device (9; 10) being evaluated for controlling said working distance (A), wherein said torch head (2) and at least one of the cutting or welding tools (3, 4; 5) are used as sensor body (2; 3; 4; 5).

2. The method according to claim 1, **characterized in that** said magnetic field is produced by means of an exciting coil (6) through which said sensor body (2; 3; 4; 5) extends such that magnetic field lines (13) are running through said body above and below a cross-sectional plane through which a central coil plane (14) of said exciting coil (6) extends, and that said magnetic field lines (13) above said coil plane (14) are sensed by means of an upper measuring element (9), a first measurement signal being produced that has a first amplitude and a first phase, and that said magnetic field lines (13) below said coil plane (14) are sensed by means of a lower measuring element (10), a second measurement signal being produced that has a second amplitude and a second phase, the relative position between first phase and second phase being determined, and a phase shift being used for controlling the working distance (A).

3. The method according to claim 2, **characterized in that** said upper measuring element is designed as an upper measuring coil (9) and said lower measuring element as a lower measuring coil (20), and that said upper measuring coil (9) and said lower measuring coil (10) are interconnected such that said first amplitude and said second amplitude mutually compensate one another at least in part.

4. The method according to claim 3, **characterized in that** an exciting coil (6) is used which coaxially extends around a central axis (8) of said sensor body (2; 3; 4; 5).

5. A thermal working machine for working a workpiece consisting of a ferromagnetic material, comprising a thermal working tool (1) which is movable along a workpiece surface (7) and comprises a torch head (2) which has exchangeably mounted thereon cutting or welding tools (3; 4; 5) extending between said torch head (2) and said workpiece surface (7), and comprising a distance controller for setting a predetermined working distance (A) between said working tool (1) and said workpiece surface (7), **characterized in that** said distance controller including an exciting element (6) that is movable with said working tool (1) for producing a magnetic field which is effective in a sensor body with ferromagnetic properties above said workpiece surface (7) and in the area of said workpiece surface (7), a measuring device (9, 10) for sensing said magnetic field or changes thereof, and an evaluating unit (21-27) by means of which measurement signals of said measuring device are evaluated for setting a control variable of said distance controller, wherein said torch head (2) and at least one of said cutting or welding tools (3; 4; 5) contain ferromagnetic material and form at least part of said sensor body (2; 3; 4; 5).

6. The working machine according to claim 5, **characterized in that** said exciting element is designed as an exciting coil (6) through which said sensor body (2; 3; 4;5) extends such that magnetic field lines (13) extend therein above and below a cross-sectional surface which includes the central coil plane (14) of said exciting coil (6), an upper measuring element (9) and a lower measuring element (10) being provided, and said upper measuring element (9) extending in the area above said central coil plane (14), and said lower measuring element (10) in the area below said central coil plane (14).

7. The working machine according to claim 6, **characterized in that** said measuring elements are designed in the form of an upper measuring coil (9) and a lower measuring coil (10), said upper measuring coil (9), said lower measuring coil (10) and said exciting coil (6) having a joint central axis (8) in which said sensor body (2; 3; 4; 5) extends.

8. The working machine according to claim 7, **characterized in that** said upper measuring coil (9) and said lower measuring coil (10) are designed such that the voltages produced in said measuring coils (9; 10) compensate one another in the working position of said working tool (1).

9. The working machine according to any one of the preceding claims 5 to 8, **characterized in that** said torch head (2) and at least one of said cutting or welding tools (3; 4; 5) consist of ferromagnetic material.

## Revendications

1. Procédé de traitement thermique d'une pièce à usiner constituée d'un matériau ferromagnétique au moyen d'un outil mobile de traitement thermique (1) mobile le long de la surface de pièce (7), pour régler la distance de travail (A), entre l'outil d'usinage (1) et la surface de pièce (7), un champ magnétique alternatif étant généré lequel agit à la fois dans la zone de la surface de pièce (7) et dans un corps de capteur ayant des propriétés ferromagnétiques au-dessus de la surface de pièce à usiner (7), le champ magnétique alternatif ou des variations ce dernier étant détectés par l'intermédiaire d'un dispositif de mesure (9 ; 10), et les signaux de mesure du dispositif de mesure (9 ; 10) étant évalués pour le réglage de la distance de travail (A), le corps de capteur (2 ; 3; 4; 5) de la tête de brûleur (2) et au moins l'un des outils de coupe ou de soudage (3 ; 4 ; 5) étant utilisés.

2. Procédé selon la revendication 1, **caractérisé en ce que** le champ magnétique est généré par une bobine d'excitation (6), à travers laquelle s'étend le corps de capteur (2 ; 3 ; 4 ; 5) de sorte qu'il est traversé au-dessus et en-dessous d'un plan transversal, à travers lequel s'étend un plan médian (14) de la bobine d'excitation (6), par des lignes de champ magnétique (13), et les lignes de champ magnétique (13) étant détectées au-dessus du plan de la bobine (14) au moyen d'un élément de détection supérieur (9), un premier signal de mesure étant généré, présentant une première amplitude et une première phase, et **en ce que** les lignes de champ magnétique (13) sont détectées en dessous du plan de la bobine (14) au moyen d'un élément de détection inférieur (10), un deuxième signal de mesure étant généré, ayant une deuxième amplitude et une deuxième phase, la position relative entre la première phase et la seconde phase étant déterminée et un décalage de phase étant utilisé pour régler la distance de travail (A).

3. Procédé selon la revendication 2, **caractérisé en ce que** l'élément de détection supérieur est réalisé comme bobine de mesure supérieure (9) et l'élément de détection inférieur est réalisé comme bobine de mesure inférieure (10), et que la bobine de mesure supérieure (9) et la bobine de mesure inférieure (10) sont reliées entre elles de sorte que les première et seconde amplitudes sont compensées mutuellement au moins partiellement.

4. Procédé selon la revendication 3, **caractérisé en ce qu'**il est utilisé une bobine d'excitation (6) qui s'étend coaxialement autour d'un axe central (8) du corps de capteur (2; 3; 4; 5).

5. Machine de traitement thermique pour l'usinage d'une pièce à usiner constituée de matériau ferromagnétique, comprenant un outil de traitement thermique (1) mobile le long de la surface de la pièce (7) présentant une tête de brûleur (2) sur laquelle sont fixés de manière interchangeable des outils de coupe ou de soudage (3; 4; 5), qui s'étendent entre la tête de brûleur (1) et la surface de pièce (7), et comprenant un réglage pour ajuster une distance de travail prédéterminée (A) entre l'outil d'usinage (1) et la surface de la pièce (7), **caractérisée en ce que** le réglage de distance comprend un élément excitateur (6) mobile avec l'outil de traitement thermique pour générer un champ magnétique, qui agit dans un corps de capteur ayant des propriétés ferromagnétiques au-dessus de la surface de pièce (7) et dans la zone de la surface de pièce (7), un dispositif de mesure (9 ; 10), pour la détection du champ magnétique ou des modifications de ce dernier, et une unité d'évaluation (21 à 27) qui évalue les signaux de mesure du dispositif de mesure pour le réglage d'une grandeur de réglage, la tête de brûleur (2) et au moins l'un des outils de coupe ou de soudage (3 ; 4 ; 5) contenant un matériau ferromagnétique et formant au moins une partie du corps de capteur (2 ; 3 ; 4 ; 5).

6. Machine de traitement de surface selon la revendication 5, **caractérisée en ce que** l'élément d'excitation est réalisé sous forme de bobine de champ (6), à travers laquelle s'étend le corps de capteur (2 ; 3 ; 4 ; 5) dans lequel s'étendent des lignes de champ magnétique (13) au-dessus et en dessous d'une surface transversale, qui comprend le plan médian (14) de la bobine d'excitation (6), un élément de mesure supérieur (9) et un élément de mesure inférieur (10) étant prévus, et l'élément de détection supérieur (9) s'étendant dans la zone au-dessus du plan de bobine médian (14) et l'élément de détection inférieur (10) dans la zone en dessous du plan de bobine médian (14).

7. Machine d'usinage selon la revendication 6, **caractérisée en ce que** les éléments de mesure sont formés sous forme de bobine supérieure de mesure (9) et de bobine de mesure inférieure (10), la bobine de détection supérieure (9), la bobine inférieure de mesure (10) et la bobine d'excitation (6) présentant un axe central commun (8), dans lequel s'étend le corps de capteur (2; 3; 4; 5).

8. Machine d'usinage selon la revendication 7, **caractérisée en ce que** la bobine de mesure supérieure (9) et la bobine inférieure de mesure (10) sont conçues de sorte que les tensions générées dans les bobines de mesure (9; 10) sont compensées dans la position de travail de l'outil de traitement (1).

9. Machine d'usinage selon l'une quelconque des revendications précédentes 5 à 8, **caractérisée en ce que** la tête de brûleur (2) et au moins l'un des outils de coupe ou de soudage (3 ; 4 ; 5) sont constitués d'un matériau ferromagnétique.
